# EUROPEAN PATENT SPECIFICATION

(11) **EP 4 143 098 B1**
(45) Date of publication and mention of the grant of the patent: **11.03.2026**
(21) Application number: 21721445.1
(22) Date of filing: 21.04.2021
(51) Int. Cl.: B65D 21/08, B65G 1/04

(54) **AUTOMATED STORAGE AND RETRIEVAL SYSTEM AND METHOD OF STORING A HEIGHT-ADJUSTABLE STORAGE CONTAINER**
AUTOMATISIERTES LAGER- UND ABRUFSYSTEM UND VERFAHREN ZUM LAGERN EINES HÖHENVERSTELLBAREN LAGERBEHÄLTERS
SYSTÈME AUTOMATISÉ DE STOCKAGE ET DE RÉCUPERATION ET PROCÉDÉ DE STOCKAGE D'UN CONTENEUR DE STOCKAGE Ã HAUTEUR AJUSTABLE

(30) Priority: 28.04.2020 NO 20200499
(43) Date of publication of application: 08.03.2023
(73) Proprietor: AUTOSTORE TECHNOLOGY AS, 5578 Nedre Vats (NO)
(72) Inventor: HEGGEBØ, Jørgen, Djuve, 5580 Ølen (NO)
(74) Representative: Kilburn & Strode LLP
(86) International application number: PCT/EP2021/060382
(87) International publication number: WO 2021/219459

(56) References cited:
- WO-A1-2018/069282
- WO-A1-2019/076516
- WO-A1-2019/232652
- FR-A1- 2 855 503
- GB-A- 2 345 282
- GB-A- 2 456 309
- US-A- 5 715 962
- US-A1- 2018 037 412

## Description

### FIELD OF THE INVENTION

The present invention relates to an automated storage and retrieval system in which adjustable storage containers are stored. The present invention also relates to a method for storing product items in adjustable storage containers in an automated storage and retrieval system.

### BACKGROUND AND PRIOR ART

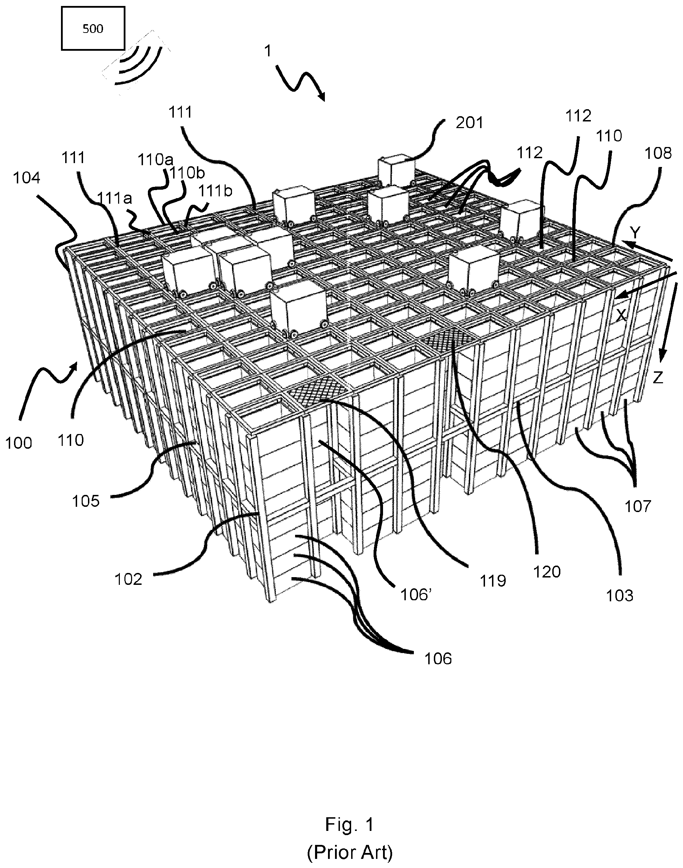

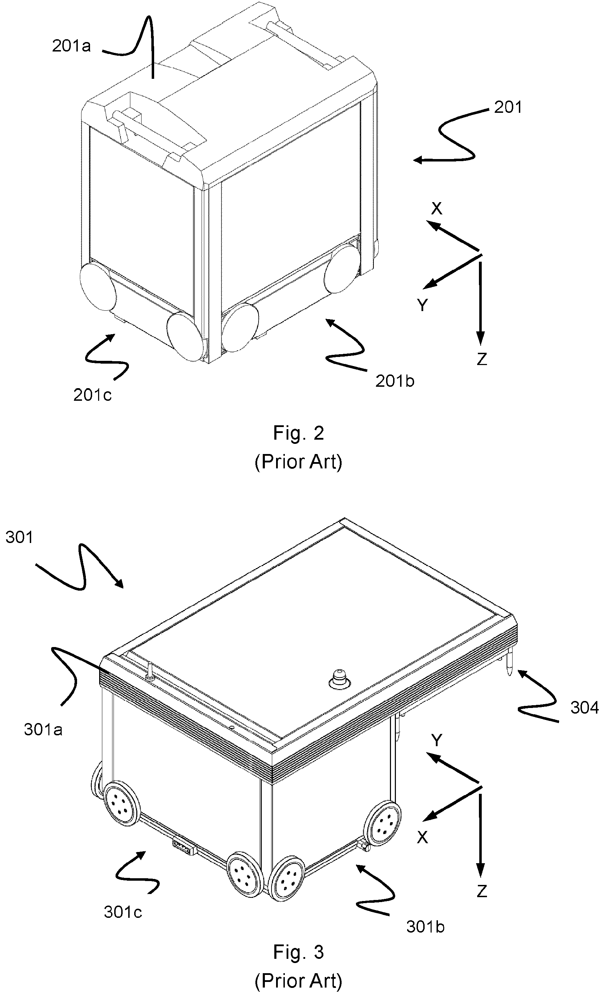

Fig. 1 discloses a typical prior art automated storage and retrieval system 1 with a framework structure 100 and Figs. 2 and 3 disclose two different prior art container handling vehicles 201,301 suitable for operating on such a system 1.

The framework structure 100 comprises upright members 102, horizontal members 103 and a storage volume comprising storage columns 105 arranged in rows between the upright members 102 and the horizontal members 103. In these storage columns 105 storage containers 106, also known as bins, are stacked one on top of one another to form stacks 107. The members 102, 103 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301 are operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301 in a first direction X across the top of the frame structure 100, and a second set of parallel rails 111 arranged perpendicular to the first set of rails 110 to guide movement of the container handling vehicles 201,301 in a second direction Y which is perpendicular to the first direction X. Containers 106 stored in the columns 105 are accessed by the container handling vehicles through access openings 112 in the rail system 108. The container handling vehicles 201,301 can move laterally above the storage columns 105, i.e. in a plane which is parallel to the horizontal X-Y plane (as shown in Fig. 1).

The upright members 102 of the framework structure 100 may be used to guide the storage containers 106 during raising of the containers out from and lowering of the containers into the columns 105. The stacks 107 of containers 106 are typically self-supportive.

Each prior art container handling vehicle 201,301 comprises a vehicle body 201a,301a, and first and second sets of wheels 201b,301b,201c,301c which enable the lateral movement of the container handling vehicles 201,301 in the X direction and in the Y direction, respectively. In Fig. 2 and 3 two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of the sets of wheels 201b,301b,201c,301c can be lifted and lowered, so that the first set of wheels 201b,301b and/or the second set of wheels 201c,301c can be engaged with the respective set of rails 110, 111 at any one time.

Each prior art container handling vehicle 201,301 also comprises a lifting device (not shown) for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301 so that the position of the gripping / engaging devices with respect to the vehicle 201,301 can be adjusted in a third direction Z which is orthogonal the first direction X and the second direction Y. Parts of the gripping device of the container handling vehicle 301 are shown in Fig. 3 indicated with reference number 304. The gripping device of the container handling device 201 is located within the vehicle body 201a in Fig. 2.

Conventionally, and also for the purpose of this application, in the automated storage and retrieval system 1, Z=1 identifies the uppermost layer of storage containers, i.e. the layer immediately below the rail system 108, Z=2 the second layer below the rail system 108, Z=3 the third layer etc. In the exemplary prior art automated storage and retrieval system 1 disclosed in Fig. 1, Z=8 identifies the lowermost, bottom layer of storage containers. Similarly, X=1...n and Y=1... n identifies the position of each storage column 105 in the horizontal plane. Consequently, as an example, and using the Cartesian coordinate system X, Y, Z indicated in Fig. 1, the storage container identified as 106' in Fig. 1 can be said to occupy storage position X=10, Y=2, Z=3. The container handling vehicles 201,301 can be said to travel in layer Z=0, and each storage column 105 can be identified by its X and Y coordinates.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y- and Z-direction.

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1.

Fig. 3 shows an alternative configuration of a container handling vehicle 301 with a cantilever construction. Such a vehicle is described in detail in e.g. NO317366.

The central cavity container handling vehicles 201 shown in Fig. 2 may have a footprint that covers an area with dimensions in the X and Y directions which is generally equal to the lateral extent of a storage column 105, e.g. as is described in WO2015/193278A1.

The term 'lateral' used herein may mean 'horizontal'.

Alternatively, the central cavity container handling vehicles 201 may have a footprint which is larger than the lateral area defined by a storage column 105, e.g. as is disclosed in WO2014/090684A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018/146304A1 illustrates a typical configuration of rail system 108 comprising rails and parallel tracks in both X and Y directions

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station

The conveyor system may be arranged to transfer storage containers 106 between different framework structures, e.g. as is described in WO2014/075937 A1.

When a storage container 106 stored in one of the columns 105 disclosed in Fig. 1 is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301 so that a desired storage container 106 can be delivered to the desired location at the desired time without the container handling vehicles 201,301 colliding with each other, the automated storage and retrieval system 1 comprises a control system 500 which typically is computerized and which typically comprises a database for keeping track of the storage containers 106.

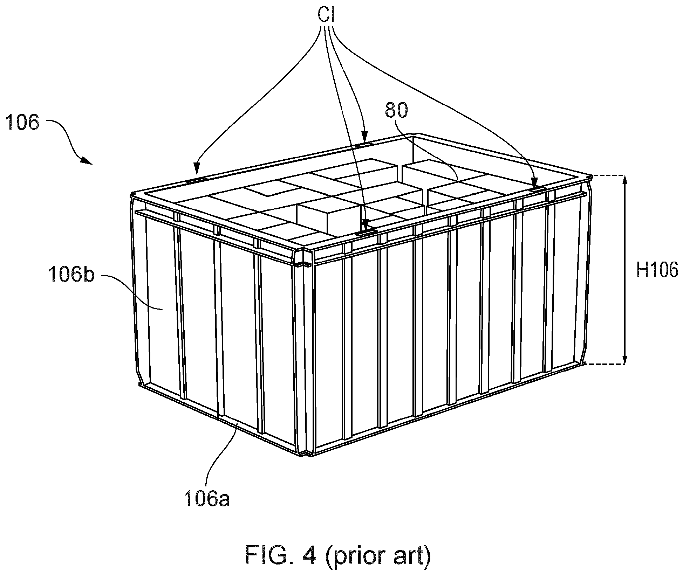

In Fig. 4, a prior art storage container 106 used in the above automated storage and retrieval system 1 is shown containing several product items 80. The storage container 106 comprises a base 106a and four side walls 106b protruding up from the base. In the upper parts of the side walls, a connection interface CI is provided for the gripping / engaging devices of the container handling vehicles to engage and hence be able to lift the container 106. The storage container 106 is stackable, i.e. the base 106a has a shape adapted to be stacked above a similar storage container. The height of the storage container 106 is indicated as H106.

Further storage systems are known from WO 2019/232652 A1, US 2018/037412 A1, WO 2018/069282 A1 and WO 2019/076516 A1.

Several types of height-adjustable storage containers are known, for example from GB 2456309, US 5715962 and FR 2855503.

One object of the present invention is to improve efficiency the above automated storage and retrieval systems.

### SUMMARY OF THE INVENTION

The present invention relates to an automated storage and retrieval system for storing and retrieving product items stored in storage containers, wherein the system comprises:
- a framework with upright members and horizontal members;
- a storage volume comprising storage columns between the members, where the storage containers are stackable in stacks within the storage columns;
- a rail system above the framework;
- a port wherein product items are retrieved from and/or supplied to the storage container;
- container handling vehicles moving along the rail system for transporting the storage containers between the storage columns and the port;
characterized in that the system comprises:
- a tool configured to adjust the height of a height-adjustable storage container according to a filling level of the height-adjustable storage container.

In one aspect, the tool is located at the port.

In one aspect, the tool comprises:
- a filling level detector for detecting the filling level of the height-adjustable storage container;
wherein the tool is configured to adjust the height of an adjustable storage container based on information from the filling level detector.

Alternatively, the tool is controlled manually based on a manual observation of the filling level.

In one aspect, the system further comprises a control system, wherein a parameter representative of the height of the height-adjustable storage container is stored within the control system for each height-adjustable storage container.

In one aspect, the control system is configured to determine the storage column in which the storage container is to be stored in, based on the parameter representative of the height of the height-adjustable storage container.

In one aspect, the parameter representative of the height of the height-adjustable storage container is updated during or after the height has been adjusted at the port. The height can be calculated based on data from the tool. Alternatively, the height can be measured.

In one aspect, the height-adjustable storage container is a height-adjustable storage container comprising:
- a lower container frame comprising a base and four lower walls extending from the base;
- an upper container frame comprising four upper walls, wherein each of the upper walls at least partially overlaps a respective one of the four lower walls;
wherein the storage container comprises a connection structure for connecting the lower container frame and the upper container frame together, and which allows the relative positioning of the lower container frame and the upper container frame to be adjusted to change the height of the height-adjustable storage container.

In one aspect, the connection structure is connected to the four lower walls and/or the four upper walls. In one aspect, the connection structure is at least partially integrated with the four lower walls and/or the four upper walls.

In one aspect, the storage container is an open-top container, wherein product items are retrieved from or inserted into the storage container via an opening in the upper container frame.

In one aspect, the connection structure is providing that the lower container frame is fixed with respect to the upper container frame during normal handling of the storage container, i.e. unintentional relative positioning between the lower container frame and upper container frame is not possible during such normal handling. Relative positioning between the lower container frame and upper container frame is only allowed by intentional adjustment of the connection structure.

The height-adjustable storage container may be in a reduced-height configuration, where there is a large overlap between the upper walls and lower walls. The height-adjustable storage container may also be in a full-height configuration, where there is only a small overlap between the upper walls and lower walls. These two configurations may be the only two configurations. The height-adjustable storage container may have several intermediate configurations between the reduced-height configuration and the full-height configuration. The height-adjustable storage container may be continuously or discretely adjusted between the reduced-height configuration and the full-height configuration.

In one aspect, the connection structure comprises:
- a first tube attached to one of the lower container frame or upper container frame;
- a second tube being smaller than the first tube, attached to the other of the lower container frame or upper container frame,
- wherein the first tube is received at least partially over the second tube.

In one aspect, the first and second tube are slidingly engaged with each other. In one aspect, in the reduced-height configuration, there is a large overlap between the first and second tubes and in the full-height configuration, there is only a small overlap between the first and second tubes.

In one aspect, the first and second tubes are cylindrical, the first tube having a first diameter and the second tube having a second diameter which is smaller than the first diameter. Alternatively, the tubes may have an oval, triangular, rectangular or polygonal cross section.

In one aspect, the connection structure comprises:
- a third tube, being larger than the first tube;
- wherein the second tube and third tube are arranged coaxially, with the second tube inside the third tube,
- wherein the first tube is received at least partially within a space formed between the second tube and the third tube.

In one aspect, also the third tube is cylindrical, having a third diameter which is larger than the first diameter. The space between the second tube and the third tube may be annular. However, also the third tube may have other cross-sectional shapes.

In one aspect, the storage container comprises a fastener retained at least partially within a bore of the first tube, the fastener comprising threads which engage an inner threaded bore of the second tube.

Hence, by rotating the fastener, the second tube is moved in relation to the first tube.

In one aspect, the first tube comprises an annular projection or annular groove for retaining the fastener, and the fastener comprises a corresponding annular groove or annular projection.

Hence, the fastener is prevented from moving along the axis of the second tube, but the fastener may rotate to move the second tube in relation to the first tube.

In one aspect, the fastener comprises a tool interface at one or both ends of the fastener.

In one aspect, the tool interface is retracted with respect to the outer surfaces of the storage container. Hence, unintentional height adjustment may be avoided.

In one aspect, the storage container comprising a retrievable locking pin for locking the lower container frame to the upper container frame.

In one aspect, the connection structure comprises:
- a received wall portion being a portion of one of the lower container frame or upper container frame;
- a double-walled portion being a portion of the other of the lower container frame or upper container frame, the double-walled portion comprising two parallel walls spaced by a gap, the gap being sized to receive the received wall;

- a set of vertically spaced first through-holes in the double-walled portion;
- a set of vertically spaced second through-holes in the received wall;
- wherein relative motion of the upper container frame and lower container frame causes different through-holes in the double-walled portion and received portion to be brought into alignment;
- wherein the connection structure further comprises a fastener configured to pass through the aligned through-holes, to fix the relative position of the upper container frame and lower container frame.

In one aspect, the storage container comprising a locking pin for engaging the fastener.

In one aspect, the connection structure comprises a rack-and-pinion, with the rack being provided on one of the upper container frame and lower container frame, and the pinion being provided on the other of the upper container frame and lower container frame.

In one aspect, the lower container frame comprises a lower stacking interface and the upper container frame comprises an upper stacking interface; thereby allowing the height-adjustable storage container to be stacked above or below similar or identical storage containers; and
wherein the upper container frame comprises a upper vehicle connection interface, thereby allowing the height-adjustable storage container to be lifted via the upper vehicle connection interface.

In one aspect, the storage container comprises two or four connection structures. In one aspect, the connection structures are located in corners of the storage containers.

In one aspect, the lower and upper container frames have a rectangular cross-sectional shape.

In one aspect, the fastener is oriented in a vertical direction, i.e. perpendicular to the base. Alternatively, the fastener is oriented in parallel with the base In one aspect, the storage container is made of moulded plastic, where the lower container frame is moulded as one, single part, and the upper container frame is moulded as one, single part separate from the lower container frame. The connection structure may also be moulded as part of the respective frames. Hence, the only additional part is the one or plurality of fasteners.

In one aspect, the upper and lower container frames each comprises an array of moulded ribs, allowing the load of the product items carried by the base of the lower container frame to be transferred into the side walls and further to the upper container frame via the fastening elements or a number of fastening elements.

The present invention also relates to a method of storing a height-adjustable storage container in an automated storage and retrieval system comprising:
- measuring the filling-level of the height-adjustable storage container at a port of the automated storage and retrieval system;
- adjusting the height of the height-adjustable storage container at the port according to the measured filling-level.

### BRIEF DESCRIPTION OF THE DRAWINGS

The following drawings are appended to facilitate the understanding of the invention. The drawings show exemplary embodiments of the invention, which will now be described by way of example only, wherein:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilever for carrying storage containers underneath.
Fig. 4 shows a perspective view of a prior art storage container.
Fig. 5 shows a perspective view of a first embodiment of a storage container in a first state.
Fig. 6 shows a perspective view of a first embodiment of a storage container in a second state.
Fig. 7 is a top view of the first embodiment of a storage container.
Fig. 8a shows a perspective view of a connection structure provided in one corner of the storage container.
Figs. 8b and 8c are cross sectional side views of the connection structure.
Fig. 8d is a side view of the fastening element of the connection structure.
Fig. 8e is a side view of an alternative fastening element.
Fig. 8f shows a cross sectional side view of an alternative connection structure.
Figs. 8g and 8h illustrates alternative locations of the connection structure.
Figs. 9a-c shows how the height of the storage container is adjusted at a port.
Fig. 9d shows an alternative adjustment of the height of the storage container.
Fig. 9e shows yet another alternative adjustment of the height of the storage container.
Figs. 10a and 10b illustrate an alternative connection structure.
Fig. 11 shows an alternative connection structure.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3, i.e. comprising a number of upright members 102 and a number of horizontal members 103, which are supported by the upright members 102, and further that the framework structure 100 comprises a rail system 108 in the X direction and Y direction.

The framework structure 100 further comprises storage compartments in the form of storage columns 105 provided between the members 102, 103, where storage containers 106 are stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700x700 columns and a storage depth of more than twelve containers.

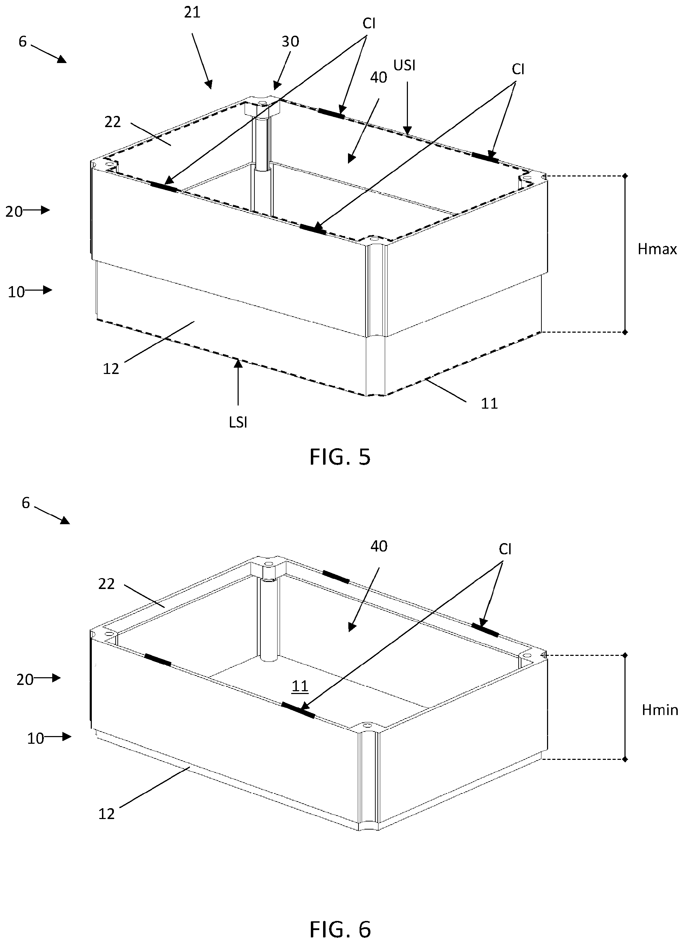

It is now referred to fig. 5 and 6. Here it is shown a height-adjustable storage container 6. In this embodiment, the storage container 6 comprises two main parts, a lower container frame 10 and an upper container frame 20.

The lower container frame 10 comprises a base 11 and four lower walls 12 extending from the base 11. As shown in fig. 5, the first two lower walls are oriented in parallel with each other, while the other two lower walls are also oriented in parallel with each other and perpendicular to the first two walls. The base 11 is forming the floor of a storage compartment 40 within the storage container 6.

The upper container frame 20 comprises four upper walls 22. Each of the upper walls 22 is at least partially overlapping a respective one of the four lower walls 11, i.e. each one of the four upper walls 22 are provided in parallel with each one of the lower walls 11.

The storage container 6 further comprises a connection structure 30 for connecting the lower container frame 10 and the upper container frame 20 together. In the present embodiment, most of the connection structure 30 is integrated with the lower container frame 10 and the upper container frame 20, as the lower container frame 10 together with parts of the connection structure 30 are moulded as one, single part, and the upper container frame 20 together with other parts of the connection structure 30 is moulded as one, single part separate from the lower container frame 10. However, the connection structure 30 may also be separate parts connected or secured to from the lower and upper container frames 10, 20. In such a case, the storage container 6 is considered to have more than two main parts.

In the present embodiment, the storage container 6 comprises four connection structures 30 located in the corners of the respective container frames 10, 20.

The connection structure 30 allows the relative positioning of the lower container frame 10 and the upper container frame 20 to be adjusted to change the height of the height-adjustable storage container 6. In fig. 5, the storage container 6 is considered to be in a full-height configuration, where the height is indicated as a maximum height Hmax. In fig. 6, the storage container 6 is in a reduced-height configuration, where the height is indicated as a minimum height Hmin.

In fig. 5, there is only a small overlap between the upper walls 22 and lower walls 12, while in fig. 6, there is a large overlap between the upper walls 22 and lower walls 11. The height-adjustable storage container 6 may have several intermediate configurations between the reduced-height configuration and the full-height configuration, i.e. configurations where the height of the storage container 6 is between the minimum height Hmin and the maximum height Hmax.

In fig. 5, it is further shown that the lower container frame 10 comprises a lower stacking interface LSI and the upper container frame 20 comprises an upper stacking interface USI. Hence, the height-adjustable storage container 6 can be stacked above or below other storage containers 6 in a stack 107 in one of the columns 105 of the framework structure 100 shown in fig. 1. It should be noted that the height-adjustable storage container 6 can be stacked above or below other height-adjustable storage containers and also above or below other fixed-height storage containers 106, for example the fixed-height storage container shown in fig. 4.

The upper container frame 20 also comprises an upper vehicle connection interface CI, thereby allowing the height-adjustable storage container 6 to be lifted via the upper vehicle connection interface CI, for example by means of a container handling vehicle 201, 301.

The upper container frame 20 comprises a top opening 21 for retrieving product items 80 from or for inserting product items 80 into the compartment 40 of the storage container. Hence, the storage container is considered to be an open-top type of storage container.

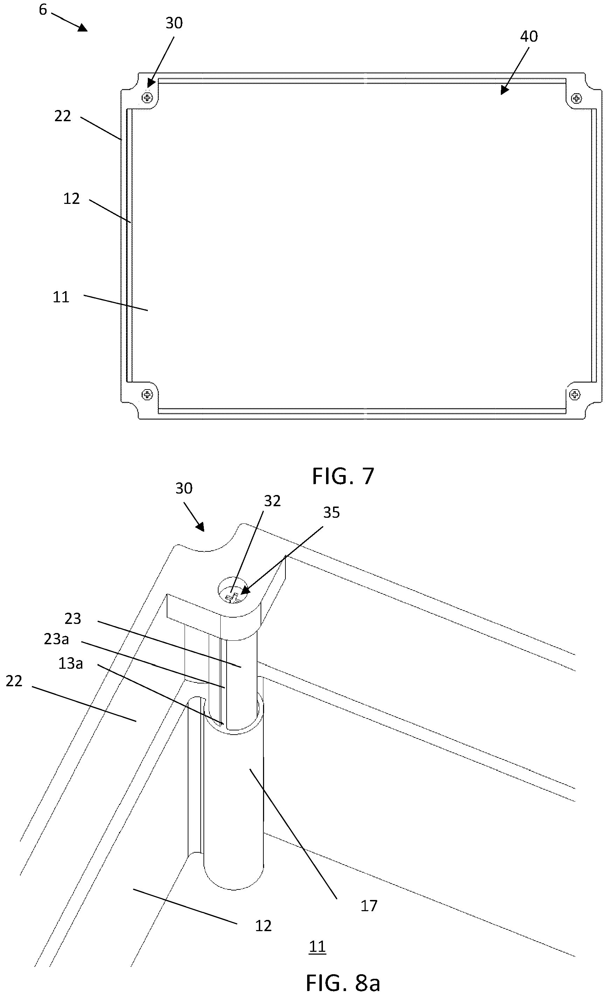

In fig. 7, it is shown how the four connection structures 30 are located in each corner of the storage container. The base area of the storage compartment 40 within the storage container 6 will typically be less than the base area of the storage compartment of a corresponding fixed height storage container (fig. 4), but the base area is not considerably reduced.

One embodiment of the connection structure 30 will now be described with reference to fig. 8a - 8d. Here, it is shown that the connection structure 30 comprises a first tube 23 attached to the upper container frame 20 and a second tube 13 being smaller than the first tube, attached to the lower container frame 10. In addition, the connection structure 30 comprises a third tube 17 being larger than the second tube 23.

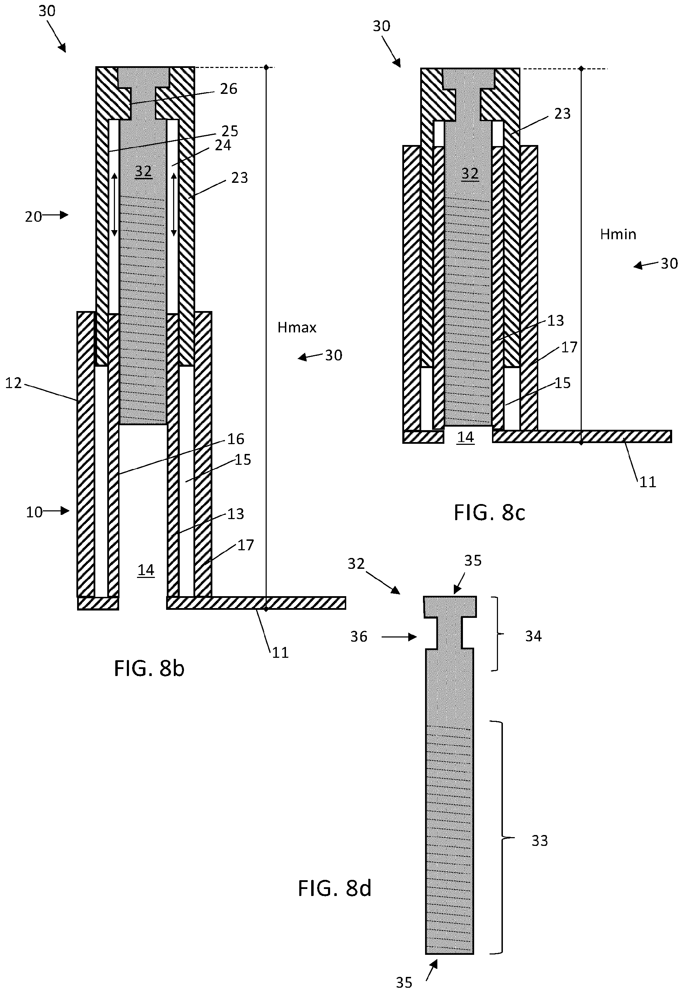

All the tubes 23, 13, 17 are circular tubes, where the outer diameter of the first tube is larger than the outer diameter of the first tube and where the outer diameter of the third tube is larger than the outer diameter of the second tube. As shown in fig. 8b, a through bore 14 is provide in the longitudinal or vertical direction of the second tube 13. In the present embodiment, the bore 14 is provided with threads. A space or annulus 15 is defined radially between the second tube 23 and the third tube 17, allowing the first tube 23 to be slidingly engaged in a vertical direction within this annulus 15. The first tube 23 is received at least partially over the second tube 13, i.e. the first tube 23 is received within the annulus 15 from above.

As shown in fig. 8a, the second tube 13 and the third tube 17 are connected to each other via a vertical element 13a provided in a vertical slit 23a in the first tube 23. The second tube 13 and the third tube 17 are also connected to each other via the base 11.

Fig. 8b shows the full-height configuration, where there is only a small overlap between the first and second tubes. Fig. 8c illustrates the reduced-height configuration, where there is a relatively larger overlap between the first and second tubes.

In fig. 8b, it is shown that a fastener 32 retained at least partially within a bore 24 of the first tube 23. The first tube 23 comprises an annular projection 26 for retaining the fastener 32, and the fastener 32 comprises a corresponding annular groove 36.

In fig. 8d, it is shown that the upper area 34 of the fastener 32, including the area of the annular groove 26, is non-threaded. Hence, the fastener 32 may be rotated with respect to the first tube 23, without any relative axial or vertical movement between the first tube 23 and the fastener 32.

The lower area comprises threads. This area is referred to as a threaded area 33. The threaded area engage the threaded bore 14 of the second tube 13. Hence, by rotating the fastener 32, the second tube 13 is moved in relation to the first tube 23.

The fastener comprises a tool interface 35 at one or both ends of the fastener. The tool interface 35 may be a screwdriver type of interface. In the present embodiment, the tool interface 35 is a Phillips screwdriver interface.

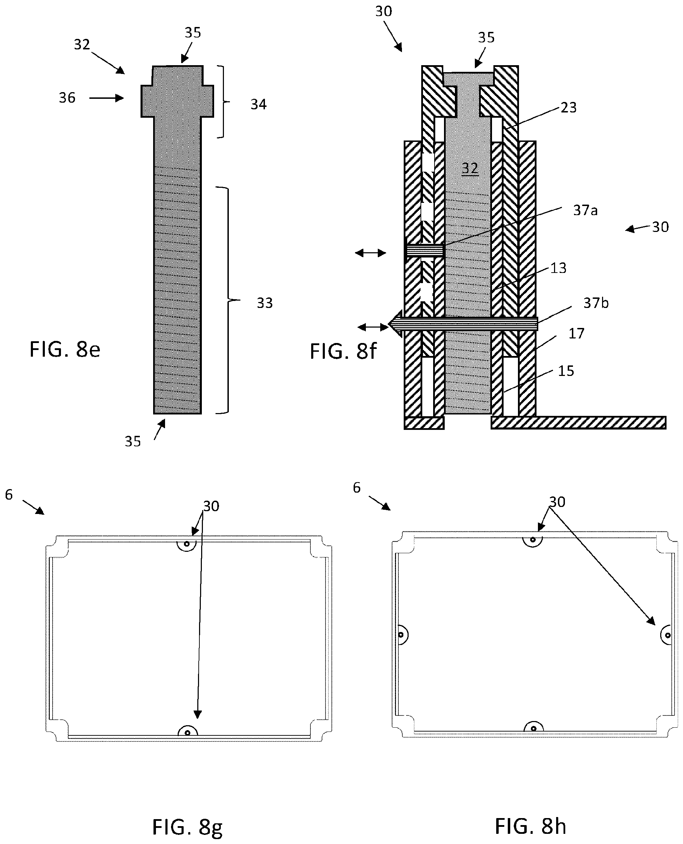

In an alternative embodiment shown in fig. 8e, the fastener 32 comprises an annular projection 36. Here, the first tube 23 may comprises an annular groove.

The above connection structure 30 is providing that the lower container frame 10 is fixed with respect to the upper container frame 20 during normal handling of the storage container, i.e. that unintentional relative positioning between the lower container frame 10 and the upper container frame 20 is prevented when the storage container 6 is stacked above or below other storage containers in a stack, when the storage container 6 is lifted by container handling vehicles via its connection interface CI etc.

In alternative embodiment shown in fig. 8f, it is shown that an additional retrievable locking pin 37a can be used to lock the lower container frame 10 and the upper container frame 20 to each other. The locking pin 37a is pushed horizontally into openings provided in the first, second and third tubes. This locking pin 37a must be retrieved in order to enable adjustment of the height of the storage container 6.

Yet an alternative is also shown in fig. 8f, where a retrievable locking pin 37b is pushed horizontally into openings provided in the first, second and third tubes and in addition into the fastener 32.

The use of one of or both of the locking pin 37a, 37b may be considered necessary if the load in the storage container is very heavy, to avoid unintentional height adjustment.

It should also be noted that the tool interface 35 may be retracted with respect to the outer surfaces of the storage container 6.

It is now referred to fig. 8g, where it is shown that the lower and upper container frames 10, 20 have a rectangular cross-sectional shape, i.e. with two parallel longer side walls and two parallel short walls. Here, the adjustable storage container 6 comprises two connection structures 30, each positioned adjacent to and centrally on the longer side walls of the storage container 6.

It is now referred to fig. 8h. Here the adjustable storage container 6 comprises four connection structures 30, two positioned adjacent to and centrally on the longer side walls of the storage container 6 and two positioned adjacent to and centrally on the shorter side walls of the storage container 6.

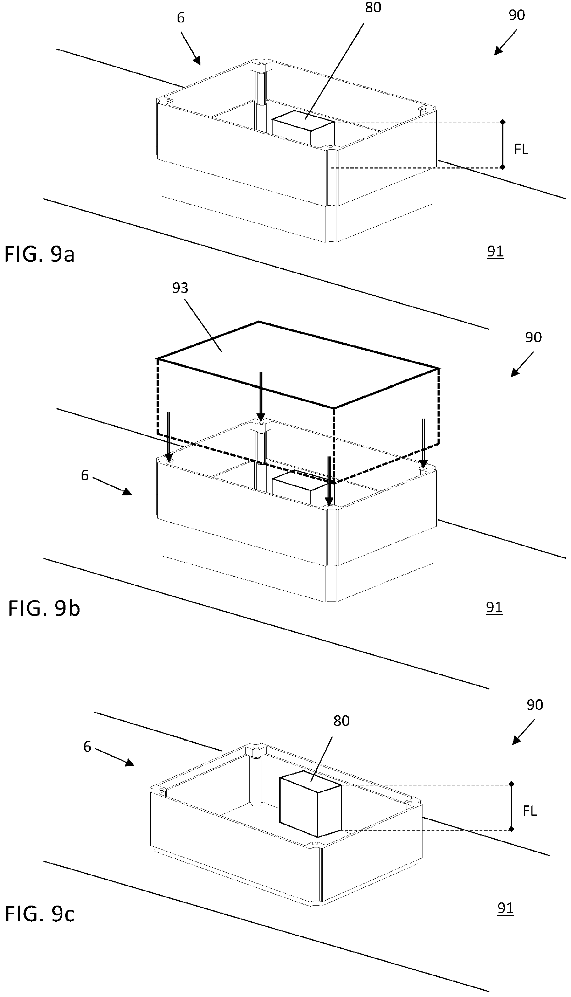

It is now referred to fig. 9a-9c, where a port 90 is shown. The port 90 is a location within the automated storage system 1 where product items 80 are retrieved from and/or supplied to the storage container 6, 106, either manually or automatically. The height of the storage container 6 will typically be adjusted after product items have been retrieved from and/or supplied to the storage container. However, it is also possible that the height is adjusted before product items have been retrieved from and/or supplied to the storage container.

In automated storage and retrieval systems 1 where the above height-adjustable storage container 6 is used, the control system 500 is typically configured to store a parameter representative of the height of the height-adjustable storage container 6 together with other information about each storage container. Hence, the presently adjusted height for each storage container will typically be known for each storage container arriving at the port. Hence, if product items are to be retrieved from the storage container, then no height adjustment is performed before arrival. However, if the storage container arriving to the port is adjusted to a height lower than a predetermined threshold height, and product items is to be supplied to the storage container, then the height may be adjusted before arrival to the port.

In fig. 9a - 9c, an assembly line or conveyor 91 is shown, where a storage container 6 containing a product item 80 is shown. The height of the product item 80 inside the storage container indicates a filling level FL (best shown in fig. 9c). In fig. 9a, the storage container 6 is adjusted to its maximum height Hmax.

In fig. 9b, a tool 93 is shown schematically. The tool 93 is configured to adjust the height of a height-adjustable storage container 6 according to the filling level FL of the height-adjustable storage container 6. In fig. 9b, the tool 93 comprises four screwdrivers for rotating the four fasteners 32 simultaneously. Here, as the filling level FL is lower than the height shown in fig. 9a, and hence, the height is reduced to the height shown in fig. 9c.

In the above embodiment, the filling level 93 is observed by an operator and by using a user interface, the tool 93 is controlled by the operator until the desired height is achieved. The tool 93 may comprise an observation window for observing the compartment 40 of the storage container while the tool 93 is used, to achieve that the height is adjusted to the desired level.

The tool 93 may be provided above a conveyor 91 transporting storage containers to the location where product items are retrieved from or supplied to the storage container and/or above a conveyor 91 transporting storage containers from the location where product items are retrieved from or supplied to the storage container.

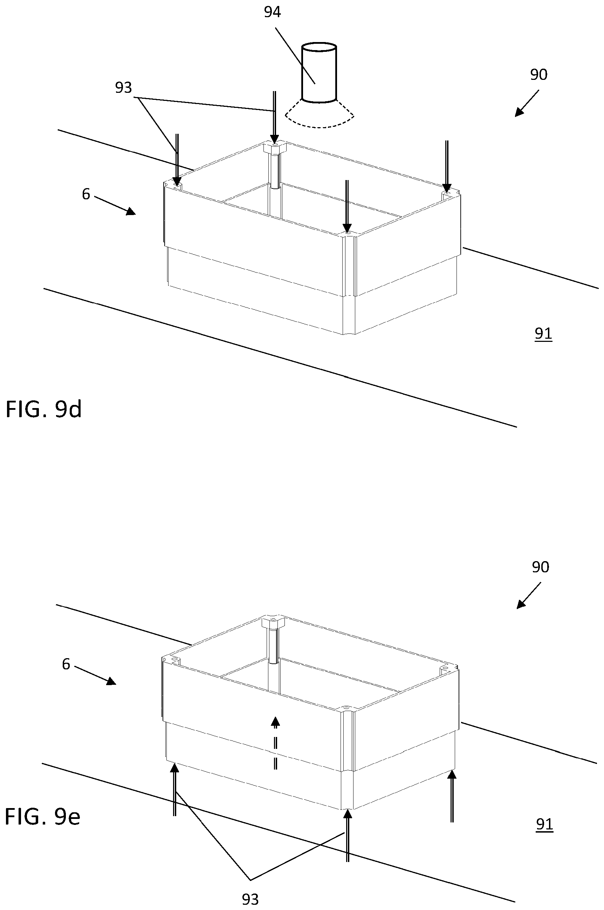

It is now referred to fig. 9d. Here, the tool 93 comprises a filling level detector 94 for detecting the filling level FL of the height-adjustable storage container 6. The tool 93 is here configured to adjust the height of an adjustable storage container 6 based on information from the filling level detector 94.

It is now referred to fig. 9e. Here, the tool 93 is located below the conveyor and is accessing the fastener via the opening 14 (see fig. 8b and 8c). The conveyor 91 may here comprise apertures or openings allowing the screwdrivers to protrude up through the conveyor.

It should be noted that the tool may be integrated in prior art ports, such as the one described in WO2019206971, WO2018233886, WO2018233886A etc. It is also possible to integrate the tool 93 into a container handling vehicle, where the height is adjusted before the storage container is delivered to the port or after the storage container has retrieved the storage container from the port.

During or after the height has been adjusted after the visit to the port, the parameter representative of the height of the height-adjustable storage container 6 is updated within the control system 500. The height can be calculated based on data from the tool 93. Alternatively, the height can be measured.

After the height-adjustment, the control system 500 may be configured to determine the storage column 105 in which the storage container 6 is to be stored in, based on the parameter representative of the height-adjustable storage container 6.

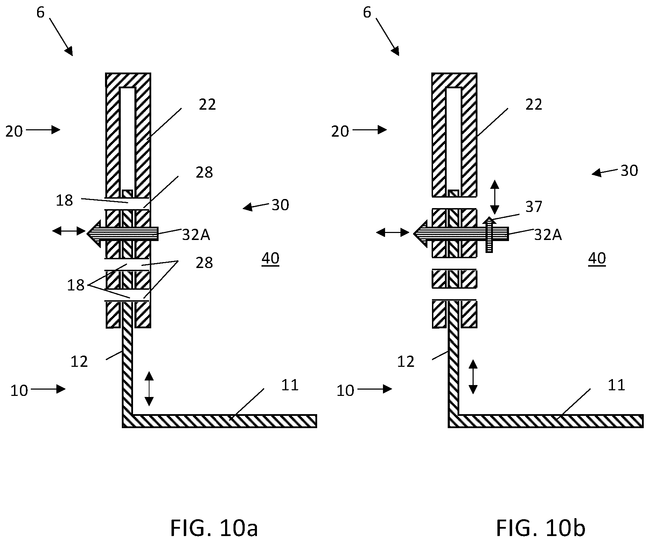

It is now referred to fig. 10a. Here, the connection structure 30 comprises a received wall portion being a portion of the lower container frame 10 and a double-walled portion being a portion of the upper container frame 20. The double-walled portion comprising two parallel walls spaced by a gap, the gap being sized to receive the received wall.

A set of vertically spaced first through-holes 28 is provided in the double-walled portion and a set of vertically spaced second through-holes 18 is provided in the received wall. Relative vertical motion of the upper container frame 10 and lower container frame 20 causes different through-holes 18, 28 in the double-walled portion and received portion to be brought into alignment.

The connection structure 30 further comprises a fastener 32A configured to pass through the aligned through-holes 18, 28, to fix the relative position of the upper container frame 10 and lower container frame 20.

This fastener 32A may be a pin without any threads. In fig. 10 b it is shown that the fastener may comprise a locking pin 37 to prevent unintentional release of the fastener. However, the fastener may be a threaded type of fastener or another type of fastener where the fastener itself is preventing unintentional release.

Hence, while the first embodiment above allows the height to be adjusted continuously between the reduced-height configuration and the full-height configuration, the embodiment of fig. 10a and 10b allows the height to be adjusted in discrete steps between the reduced-height configuration and the full-height configuration.

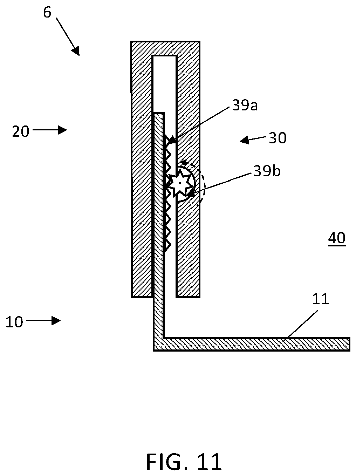

It is now referred to fig. 11. Here it is shown an embodiment similar to the one shown in fig. 10a and 10b. However, instead of vertically inserting a fastener horizontally through openings, the connection structure 30 comprises a rack-and-pinion system, with the rack 39a being provided the lower container frame 10 and the rotatable pinion being rotatably connected to the upper container frame 20. The height is adjusted by rotating the pinion via an interface.

### Alternative embodiments

In the embodiments described above, it is clear that the connections structure 30 may be at least partially be integrated as parts of the walls 12, 22 of the respective lower and upper container frame structures 10, 20. For example, parts of the third tube 17 may form parts of the lower wall 11 and parts of the first tube 23 may form parts of the upper wall 22.

It should further be noted that the connection structures may be turned upside-down, i.e. that the first tube is connected to the lower container frame 10 and the second and third tubes are connected to the upper container frame 20. In the embodiment of fig. 10a, 10b, the double-wall portion may be a part of the lower container frame 10 and the receiving portion may be a part of the upper container frame 20.

The upper frame may also comprise a cover, for preventing product items to fall out from the storage container. The cover does not prevent stacking of storage containers. The cover may be transparent or semi-transparent to observe how much the height of the storage container should be adjusted. The cover may be movably connected to the upper container frame.

According to the above, the storage container with adjustable height will improve storage efficiency of the above automated storage and retrieval systems. This storage container may be particularly useful for automated storage and retrieval systems located in smaller buildings, in basements of buildings, etc., where storage efficiency may be more crucial.

In the preceding description, various aspects of the storage container and the automated storage and retrieval system according to the invention have been described with reference to the illustrative embodiments. For purposes of explanation, specific numbers, systems and configurations were set forth in order to provide a thorough understanding of the system and its workings. However, this description is not intended to be construed in a limiting sense. Various modifications and variations of the illustrative embodiments, as well as other embodiments of the system, which are apparent to persons skilled in the art to which the disclosed subject matter pertains, are deemed to lie within the scope of the present invention as set forth in the appended claims.

### LIST OF REFERENCE NUMBERS

### Prior art (figs 1-4):

- 1: Prior art automated storage and retrieval system
- 6: Height-adjustable storage container
- 10: Lower container frame
- 11: Base
- 12: Walls
- 13: Second tube
- 14: Bore
- 15: Space
- 17: Third tube
- 18: Through holes
- 20: Upper container frame
- 22: Walls
- 23: First tube
- 24: Bore
- 26: Groove
- 28: Through holes
- 30: Connection structure
- 32: Fastener
- 32A: Fastener
- 35: Tool interface
- 37: Locking pin
- 40: Compartment
- 90: Port
- 93: Tool
- 94: Filling level detector
- 100: Framework structure
- 102: Upright members of framework structure
- 103: Horizontal members of framework structure
- 104: Storage grid
- 105: Storage column
- 106: Storage container
- 106': Particular position of storage container
- 107: Stack
- 108: Rail system
- 110: Set of parallel rails in first direction (X)
- 110a: First rail in first direction (X)
- 110b: Second rail in first direction (X)
- 111: Set of parallel rails in second direction (Y)
- 111a: First rail in second direction (Y)
- 111b: Second rail in second direction (Y)
- 112: Access opening
- 119: First port column (drop-off port column)
- 120: Second port column (pick-up port column)
- 201: Prior art central cavity storage container vehicle
- 201a: Vehicle body of the central cavity storage container vehicle 201
- 201b: First set of wheels, first direction (X)
- 201c: Second set of wheels, second direction (Y)
- 301: Prior art cantilever storage container vehicle
- 301a: Vehicle body of the cantilever storage container vehicle 301
- 301b: First set of wheels, first direction (X)
- 301c: Second set of wheels, second direction (Y)
- 304: Gripping device
- 500: Control system
- X: First direction
- Y: Second direction
- Z: Third direction

## Claims

1. An automated storage and retrieval system (1) for storing and retrieving product items (80) stored in storage containers (6, 106), wherein the system (1) comprises:
- a framework (100) with upright members (102) and horizontal members (103);
- a storage volume comprising storage columns (105) between the members (102, 103), where the storage containers (6, 106) are stackable in stacks (107) within the storage columns (105);
- a rail system (108) above the framework (100);
- a port (90) wherein product items (80) are retrieved from and/or supplied to the storage container (6, 106);
- container handling vehicles (201, 301) moving along the rail system (108) for transporting the storage containers (6, 106) between the storage columns (105) and the port (90);
**characterized in that** the system (1) comprises:
- a tool (93) configured to adjust the height of a height-adjustable storage container (6) according to a filling level (FL) of the height-adjustable storage container (6).

2. Automated storage and retrieval system (1) according to claim 1, where the tool (93) is located at the port (90).

3. Automated storage and retrieval system (1) according to claim 1 or 2, wherein the tool (93) comprises:
- a filling level detector (94) for detecting the filling level (FL) of the height-adjustable storage container (6);
wherein the tool (93) is configured to adjust the height of an adjustable storage container (6) based on information from the filling level detector (94).

4. Automated storage and retrieval system (1) according to any one of claims 1 - 3, wherein the system further comprises a control system (500), wherein a parameter representative of the height of the height-adjustable storage container (6) is stored within the control system (500) for each height-adjustable storage container (6).

5. Automated storage and retrieval system (1) according to any one of claims 1 - 4, wherein the control system (500) is configured to determine the storage column (105) in which the storage container (6) is to be stored in, based on the parameter representative of the height of the height-adjustable storage container (6).

6. Automated storage and retrieval system (1) according to any one of claims 1 - 5, wherein the height-adjustable storage container (6) is comprising:
- a lower container frame (10) comprising a base (11) and four lower walls (12) extending from the base (11);
- an upper container frame (20) comprising four upper walls (22), wherein each of the upper walls (22) at least partially overlaps a respective one of the four lower walls (11);
wherein the storage container (6) comprises a connection structure (30) for connecting the lower container frame (10) and the upper container frame (20) together, and which allows the relative positioning of the lower container frame (10) and the upper container frame (20) to be adjusted to change the height of the height-adjustable storage container (6).

7. Automated storage and retrieval system (1) according to claim 6, wherein the connection structure (30) comprises:
- a first tube (23) attached to one of the lower container frame (10) or upper container frame (20);
- a second tube (13) being smaller than the first tube, attached to the other of the lower container frame (10) or upper container frame (20),
- wherein the first tube (23) is received at least partially over the second tube (13).

8. Automated storage and retrieval system (1) according to claim 7, wherein the connection structure (30) comprises:
- a third tube (17) being larger than the first tube (23),
- wherein the second tube (13) and third tube (17) are arranged coaxially, with the second tube (13) inside the third tube (17),
- wherein the first tube (13) is received at least partially within a space (15) formed between the second tube (13) and the third tube (17).

9. Automated storage and retrieval system (1) according to any one of claims 6-8, wherein the height-adjustable container (6) is comprising a rotatable fastener (32) retained at least partially within a bore (24) of the first tube (23), the fastener comprising threads which engage an inner threaded bore (14) of the second tube (13).

10. Automated storage and retrieval system (1) according to claim 9, wherein the first tube (23) comprises an annular projection or annular groove (26) for retaining the rotatable fastener (32), and the rotatable fastener (32) comprises a corresponding annular groove or annular projection (36).

11. Automated storage and retrieval system (1) according to claim 9 or 10, wherein the fastener comprises a tool interface (35) at one or both ends of the rotatable fastener

12. Automated storage and retrieval system (1) according to any one of claims 9, 10 or 11, wherein the storage container (6) comprises a retrievable locking pin (37a; 37b) for locking the lower container frame (10) to the upper container frame (20).

13. Automated storage and retrieval system (1) according to claim 6, wherein the connection structure (30) comprises:
- a received wall portion being a portion of one of the lower container frame (10) or upper container frame (20);
- a double-walled portion being a portion of the other of the lower container frame (10) or upper container frame (20), the double-walled portion comprising two parallel walls spaced by a gap, the gap being sized to receive the received wall;
- a set of vertically spaced first through-holes (28) in the double-walled portion;
- a set of vertically spaced second through-holes (18) in the received wall;
- wherein relative motion of the upper container frame (10) and lower container frame (20) causes different through-holes (18, 28) in the double-walled portion and received portion to be brought into alignment;
- wherein the connection structure (30) further comprises a fastener (32A) configured to pass through the aligned through-holes (18, 28), to fix the relative position of the upper container frame (10) and lower container frame (20).

14. Automated storage and retrieval system (1) according to claim 13, wherein the storage container (6) comprising a locking pin (37) for engaging the fastener (32A).

15. Automated storage and retrieval system (1) according to claim 13, wherein the connection structure (30) comprises a rack-and-pinion, with the rack being provided on one of the lower container frame (10) and upper container frame (20), and the pinion being provided on the other of the lower container frame (10) and upper container frame (20).

16. Automated storage and retrieval system (1) according to any one of claims 6 - 15, wherein the lower container frame (10) comprises a lower stacking interface (LSI) and the upper container frame (20) comprises an upper stacking interface (USI); thereby allowing the height-adjustable storage container (6) to be stacked above or below similar or identical storage containers (6); and
wherein the upper container frame (20) comprises a upper vehicle connection interface (CI), thereby allowing the height-adjustable storage container (6) to be lifted via the upper vehicle connection interface (CI).

17. A method of storing a height-adjustable storage container (6) in an automated storage and retrieval system (1) comprising:
- measuring the filling-level (FL) of the height-adjustable storage container (6) of the automated storage and retrieval system (1);
- adjusting the height of the height-adjustable storage container (6) at the port according to the measured filling-level.

## Patentansprüche

1. Automatisiertes Lager- und Entnahmesystem (1) zum Lagern und Entnehmen von in Lagerbehältern (6, 106) gelagerten Produktgegenständen (80), wobei das System (1) Folgendes umfasst:
- einen Rahmen (100) mit senkrechten Elementen (102) und horizontalen Elementen (103);
- ein Lagervolumen, das Lagersäulen (105) zwischen den Elementen (102, 103) umfasst, wobei die Lagerbehälter (6, 106) in Stapeln (107) innerhalb der Lagersäulen (105) stapelbar sind;
- ein Schienensystem (108) über dem Rahmen (100);
- eine Übergabevorrichtung (90), über die Produktgegenstände (80) aus dem Lagerbehälter (6, 106) entnommen und/oder zu diesem zugeführt werden;
- Behälterumschlagfahrzeuge (201, 301), die sich entlang des Schienensystems (108) bewegen, um die Lagerbehälter (6, 106) zwischen den Lagersäulen (105) und der Übergabevorrichtung (90) zu transportieren;
**dadurch gekennzeichnet, dass** das System (1) ferner Folgendes umfasst:
- ein Werkzeug (93), das dazu ausgelegt ist, die Höhe eines höhenverstellbaren Lagerbehälters (6) entsprechend einem Füllstand (FL) des höhenverstellbaren Lagerbehälters (6) einzustellen.

2. Automatisiertes Lager- und Entnahmesystem (1) nach Anspruch 1, wobei sich das Werkzeug (93) an der Übergabevorrichtung (90) befindet.

3. Automatisiertes Lager- und Entnahmesystem (1) nach Anspruch 1 oder 2, wobei das Werkzeug (93) Folgendes umfasst:
- einen Füllstandsdetektor (94) zur Erfassung des Füllstands (FL) des höhenverstellbaren Lagerbehälters (6) ;
wobei das Werkzeug (93) dazu ausgelegt ist, die Höhe eines verstellbaren Lagerbehälters (6) basierend auf Informationen von dem Füllstandsdetektor (94) zu verstellen.

4. Automatisiertes Lager- und Entnahmesystem (1) nach einem der Ansprüche 1-3, wobei das System ferner ein Steuersystem (500) umfasst, wobei ein Parameter, der die Höhe des höhenverstellbaren Lagerbehälters (6) repräsentiert, innerhalb des Steuersystems (500) für jeden höhenverstellbaren Lagerbehälter (6) gespeichert ist.

5. Automatisiertes Lager- und Entnahmesystem (1) nach einem der Ansprüche 1-4, wobei das Steuersystem (500) dazu ausgelegt ist, die Lagersäule (105), in der der Lagerbehälter (6) zu lagern ist, basierend auf dem Parameter, der die Höhe des höhenverstellbaren Lagerbehälters (6) repräsentiert, zu bestimmen.

6. Automatisiertes Lager- und Entnahmesystem (1) nach einem der Ansprüche 1-5, wobei der höhenverstellbare Lagerbehälter (6) Folgendes umfasst:
- einen unteren Behälterrahmen (10), der einen Boden (11) und vier untere Wände (12) umfasst, die sich von dem Boden (11) erstrecken;
- einen oberen Behälterrahmen (20), der vier obere Wände (22) umfasst, wobei jede der oberen Wände (22) eine jeweilige der vier unteren Wände (11) mindestens teilweise überlappt;
wobei der Lagerbehälter (6) eine Verbindungsstruktur (30) zum Verbinden des unteren Behälterrahmens (10) und des oberen Behälterrahmens (20) miteinander umfasst, und die es ermöglicht, die relative Positionierung des unteren Behälterrahmens (10) und des oberen Behälterrahmens (20) zur Veränderung der Höhe des höhenverstellbaren Lagerbehälters (6) einzustellen.

7. Automatisiertes Lager- und Entnahmesystem (1) nach Anspruch 6, wobei die Verbindungsstruktur (30) Folgendes umfasst:
- ein erstes Rohr (23), das entweder am unteren Behälterrahmen (10) oder am oberen Behälterrahmen (20) befestigt ist;
- ein zweites Rohr (13), das kleiner als das erste Rohr ist und an dem anderen von aus dem unteren Behälterrahmen (10) oder dem oberen Behälterrahmen (20) befestigt ist,
- wobei das erste Rohr (23) zumindest teilweise über dem zweiten Rohr (13) aufgenommen ist.

8. Automatisiertes Lager- und Entnahmesystem (1) nach Anspruch 7, wobei die Verbindungsstruktur (30) Folgendes umfasst:
- ein drittes Rohr (17), das größer als das erste Rohr (23) ist,
- wobei das zweite Rohr (13) und das dritte Rohr (17) koaxial mit dem zweiten Rohr (13) innerhalb des dritten Rohrs (17) angeordnet sind,
- wobei das erste Rohr (13) zumindest teilweise in einem Raum (15) aufgenommen ist, der zwischen dem zweiten Rohr (13) und dem dritten Rohr (17) gebildet ist.

9. Automatisiertes Lager- und Entnahmesystem (1) nach einem der Ansprüche 6-8, wobei der höhenverstellbare Behälter (6) ein drehbares Befestigungselement (32) umfasst, das zumindest teilweise in einer Bohrung (24) des ersten Rohrs (23) gehalten ist, wobei das Befestigungselement Gewinde umfasst, die in eine Innengewindebohrung (14) des zweiten Rohrs (13) eingreifen.

10. Automatisiertes Lager- und Entnahmesystem (1) nach Anspruch 9, wobei das erste Rohr (23) einen ringförmigen Vorsprung oder eine ringförmige Nut (26) zum Halten des drehbaren Befestigungselements (32) umfasst und das drehbare Befestigungselement (32) eine entsprechende ringförmige Nut oder einen ringförmigen Vorsprung (36) umfasst.

11. Automatisiertes Lager- und Entnahmesystem (1) nach Anspruch 9 oder 10, wobei das Befestigungselement eine Werkzeugschnittstelle (35) an einem oder beiden Enden des drehbaren Befestigungselements umfasst.

12. Automatisiertes Lager- und Entnahmesystem (1) nach einem der Ansprüche 9, 10 oder 11, wobei der Lagerbehälter (6) einen entfernbaren Verriegelungsstift (37a; 37b) zum Verriegeln des unteren Behälterrahmens (10) an dem oberen Behälterrahmen (20) umfasst.

13. Automatisiertes Lager- und Entnahmesystem (1) nach Anspruch 6, wobei die Verbindungsstruktur (30) Folgendes umfasst:
- einen aufgenommenen Wandabschnitt, der ein Abschnitt des unteren Behälterrahmens (10) oder des oberen Behälterrahmens (20) ist;
- einen doppelwandigen Abschnitt, der ein Abschnitt des anderen aus dem unteren Behälterrahmen (10) oder dem oberen Behälterrahmen (20) ist, wobei der doppelwandige Abschnitt zwei parallele Wände umfasst, die durch einen Spalt beabstandet sind, wobei der Spalt so bemessen ist, dass er die aufgenommene Wand aufnimmt;
- einen Satz vertikal beabstandeter erster Durchgangslöcher (28) in dem doppelwandigen Abschnitt;
- einen Satz vertikal beabstandeter zweiter Durchgangslöcher (18) in der aufgenommenen Wand;
- wobei eine Relativbewegung des oberen Behälterrahmens (10) und des unteren Behälterrahmens (20) bewirkt, dass unterschiedliche Durchgangslöcher (18, 28) in dem doppelwandigen Abschnitt und dem aufgenommenen Abschnitt in Ausrichtung gebracht werden;
- wobei die Verbindungsstruktur (30) ferner ein Befestigungselement (32A) umfasst, das dazu ausgelegt ist, durch die ausgerichteten Durchgangslöcher (18, 28) zu gehen, um die relative Position des oberen Behälterrahmens (10) und des unteren Behälterrahmens (20) zu fixieren.

14. Automatisiertes Lager- und Entnahmesystem (1) nach Anspruch 13, wobei der Lagerbehälter (6) einen Verriegelungsstift (37) zum Eingreifen in das Befestigungselement (32A) umfasst.

15. Automatisiertes Lager- und Entnahmesystem (1) nach Anspruch 13, wobei die Verbindungsstruktur (30) eine Zahnstange und ein Ritzel umfasst, wobei die Zahnstange an einem aus dem unteren Behälterrahmen (10) und dem oberen Behälterrahmen (20) bereitgestellt ist und das Ritzel an dem anderen aus dem unteren Behälterrahmen (10) und dem oberen Behälterrahmen (20) bereitgestellt ist.

16. Automatisiertes Lager- und Entnahmesystem (1) nach einem der Ansprüche 6-15, wobei der untere Behälterrahmen (10) eine untere Stapelschnittstelle (LSI) umfasst und der obere Behälterrahmen (20) eine obere Stapelschnittstelle (USI) umfasst; wodurch ermöglicht wird, dass der höhenverstellbare Lagerbehälter (6) über oder unter ähnliche oder identische Lagerbehälter (6) gestapelt wird; und
wobei der obere Behälterrahmen (20) eine obere Fahrzeugverbindungsschnittstelle (CI) umfasst, wodurch ermöglicht wird, dass der höhenverstellbare Lagerbehälter (6) über die obere Fahrzeugverbindungsschnittstelle (CI) angehoben wird.

17. Verfahren zum Lagern eines höhenverstellbaren Lagerbehälters (6) in einem automatisierten Lager- und Entnahmesystem (1), umfassend:
- Messen des Füllstands (FL) des höhenverstellbaren Lagerbehälters (6) des automatisierten Lager- und Entnahmesystems (1);
- Verstellen der Höhe des höhenverstellbaren Lagerbehälters (6) an der Übergabevorrichtung entsprechend dem gemessenen Füllstand.

## Revendications

1. Système automatisé de stockage et de récupération (1) destiné à stocker et à récupérer des articles de produit (80) stockés dans des contenants de stockage (6, 106), le système (1) comprenant :
- un bâti (100) doté d'éléments verticaux (102) et d'éléments horizontaux (103) ;
- un volume de stockage comprenant des colonnes de stockage (105) entre les éléments (102, 103), où les contenants de stockage (6, 106) peuvent être empilés en piles (107) au sein des colonnes de stockage (105) ;
- un système de rails (108) au-dessus du bâti (100) ;
- un orifice (90) par lequel des articles de produit (80) sont récupérés du contenant de stockage (6, 106) et/ou fourni à celui-ci ;
- des véhicules de manutention de contenants (201, 301) se déplaçant le long du système de rails (108) pour transporter les contenants de stockage (6, 106) entre les colonnes de stockage (105) et l'orifice (90) ; **caractérisé en ce que** le système (1) comprend :
- un outil (93) conçu pour régler la hauteur d'un contenant de stockage (6) à hauteur réglable en fonction d'un niveau de remplissage (FL) du contenant de stockage (6) à hauteur réglable.

2. Système automatisé de stockage et de récupération (1) selon la revendication 1, l'outil (93) se trouvant au niveau de l'orifice (90).

3. Système automatisé de stockage et de récupération (1) selon la revendication 1 ou 2, l'outil (93) comprenant :
- un détecteur de niveau de remplissage (94) pour détecter le niveau de remplissage (FL) du contenant de stockage (6) à hauteur réglable ;
l'outil (93) étant conçu pour régler la hauteur d'un contenant de stockage (6) réglable sur la base d'informations provenant du détecteur de niveau de remplissage (94).

4. Système automatisé de stockage et de récupération (1) selon l'une quelconque des revendications 1 à 3, le système comprenant en outre un système de commande (500), un paramètre représentatif de la hauteur du contenant de stockage (6) réglable en hauteur étant stocké dans le système de commande (500) pour chaque contenant de stockage (6) réglable en hauteur.

5. Système automatisé de stockage et de récupération (1) selon l'une quelconque des revendications 1 à 4, le système de commande (500) étant conçu pour déterminer la colonne de stockage (105) dans laquelle le contenant de stockage (6) doit être stocké, sur la base du paramètre représentatif de la hauteur du contenant de stockage (6) réglable en hauteur.

6. Système automatisé de stockage et de récupération (1) selon l'une quelconque des revendications 1 à 5, le contenant de stockage (6) à hauteur réglable comprenant :
- un cadre de contenant inférieur (10) comprenant une base (11) et quatre parois inférieures (12) s'étendant à partir de la base (11) ;
- un cadre de contenant supérieur (20) comprenant quatre parois supérieures (22), chacune des parois supérieures (22) recouvrant au moins partiellement l'une respective des quatre parois inférieures (11) ;
le contenant de stockage (6) comprenant une structure de liaison (30) pour relier le cadre de contenant inférieur (10) et le cadre de contenant supérieur (20), et qui permet de régler le positionnement relatif du cadre de contenant inférieur (10) et du cadre de contenant supérieur (20) pour modifier la hauteur du contenant de stockage (6) réglable en hauteur.

7. Système automatisé de stockage et de récupération (1) selon la revendication 6, la structure de liaison (30) comprenant :
- un premier tube (23) fixé sur l'un parmi le cadre de contenant inférieur (10) et le cadre de contenant supérieur (20) ;
- un deuxième tube (13) plus petit que le premier tube, fixé à l'autre parmi le cadre de contenant inférieur (10) et le cadre de contenant supérieur (20),
- le premier tube (23) étant reçu au moins partiellement sur le deuxième tube (13).

8. Système automatisé de stockage et de récupération (1) selon la revendication 7, la structure de liaison (30) comprenant :
- un troisième tube (17) plus grand que le premier tube (23),
- le deuxième tube (13) et le troisième tube (17) étant disposés coaxialement, le deuxième tube (13) étant à l'intérieur du troisième tube (17),
- le premier tube (13) étant reçu au moins partiellement à l'intérieur d'un espace (15) ménagé entre le deuxième tube (13) et le troisième tube (17).

9. Système automatisé de stockage et de récupération (1) selon l'une quelconque des revendications 6 à 8, le contenant réglable en hauteur (6) comprenant un élément de fixation rotatif (32) retenu au moins partiellement à l'intérieur d'un alésage (24) du premier tube (23), l'élément de fixation comprenant des filetages qui viennent en prise avec un alésage fileté intérieur (14) du deuxième tube (13).

10. Système automatisé de stockage et de récupération (1) selon la revendication 9, le premier tube (23) comprenant une saillie annulaire ou une rainure annulaire (26) pour retenir l'élément de fixation rotatif (32), et l'élément de fixation rotatif (32) comprenant une rainure annulaire ou une saillie annulaire (36) correspondante.

11. Système automatisé de stockage et de récupération (1) selon la revendication 9 ou 10, l'élément de fixation comprenant une interface d'outil (35) au niveau d'une ou de deux extrémités de l'élément de fixation rotatif.

12. Système automatisé de stockage et de récupération (1) selon l'une quelconque des revendications 9, 10 ou 11, le contenant de stockage (6) comprenant une goupille de verrouillage récupérable (37a ; 37b) pour verrouiller le cadre de contenant inférieur (10) sur le cadre de contenant supérieur (20).

13. Système automatisé de stockage et de récupération (1) selon la revendication 6, la structure de liaison (30) comprenant :
- une partie paroi reçue qui est une partie de l'un parmi le cadre de contenant inférieur (10) et le cadre de contenant supérieur (20) ;
- une partie double paroi qui est une partie de l'autre parmi le cadre de contenant inférieur (10) et le cadre de contenant supérieur (20), la partie double paroi comprenant deux parois parallèles espacées par un intervalle, l'intervalle étant dimensionné pour recevoir la paroi reçue ;
- un ensemble de premiers trous traversants (28) espacés verticalement dans la partie double paroi ;
- un ensemble de seconds trous traversants (18) espacés verticalement dans la paroi reçue ;
- le mouvement relatif du cadre de contenant supérieur (10) et du cadre de contenant inférieur (20) provoquant l'alignement de différents trous traversants (18, 28) de la partie double paroi et de la partie reçue ;
- la structure de liaison (30) comprenant en outre un élément de fixation (32A) conçu pour passer à travers les trous traversants (18, 28) alignés, pour fixer la position relative du cadre de contenant supérieur (10) et du cadre de contenant inférieur (20).

14. Système automatisé de stockage et de récupération (1) selon la revendication 13, le contenant de stockage (6) comprenant une goupille de verrouillage (37) pour venir en prise avec l'élément de fixation (32A).

15. Système automatisé de stockage et de récupération (1) selon la revendication 13, la structure de liaison (30) comprenant un pignon et crémaillère, la crémaillère étant fournie sur l'un parmi le cadre de contenant inférieur (10) et le cadre de contenant supérieur (20), et le pignon étant prévu sur l'autre parmi le cadre de contenant inférieur (10) et le cadre de contenant supérieur (20).

16. Système automatisé de stockage et de récupération (1) selon l'une quelconque des revendications 6 à 15, le cadre de contenant inférieur (10) comprenant une interface d'empilage inférieure (LSI) et le cadre de contenant supérieur (20) comprenant une interface d'empilage supérieure (USI) ; permettant ainsi au contenant de stockage (6) réglable en hauteur d'être empilé au-dessus ou au-dessous de contenants de stockage (6) similaires ou identiques ; et
le cadre de contenant supérieur (20) comprenant une interface de liaison de véhicule supérieure (CI), permettant ainsi au contenant de stockage (6) réglable en hauteur d'être soulevé par l'intermédiaire de l'interface de liaison de véhicule supérieure (CI).

17. Procédé de stockage d'un contenant de stockage (6) à hauteur réglable dans un système automatisé de stockage et de récupération (1) comprenant :
- la mesure du niveau de remplissage (FL) du contenant de stockage (6) à hauteur réglable du système automatisé de stockage et de récupération (1) ;
- le réglage de la hauteur du contenant de stockage (6) à hauteur réglable au niveau de l'orifice en fonction du niveau de remplissage mesuré.
